(19) Europäisches Patentamt
European Patent Office
Office européen des brevets

(11) **EP 1 760 425 B1**

(12) **EUROPEAN PATENT SPECIFICATION**

(45) Date of publication and mention
of the grant of the patent:
**15.07.2009 Bulletin 2009/29**

(51) Int Cl.:
***G01B 11/16*** (2006.01)

(21) Application number: **06016635.2**

(22) Date of filing: **09.08.2006**

(54) **Strain measurement method and strain measurement device**

Verfahren und Vorrichtung zur Dehnungsmessung

Procédé et dispositif de mesure de l'effort

(84) Designated Contracting States:
**DE FR GB IT**

(30) Priority: **01.09.2005 JP 2005253096**

(43) Date of publication of application:
**07.03.2007 Bulletin 2007/10**

(73) Proprietor: **KABUSHIKI KAISHA
TOYOSEIKISEISAKUSHO
Tokyo-to (JP)**

(72) Inventor: **Kobayashi, Koichi c/o K.K.
Toyoseikiseisakusho
Tokyo-to (JP)**

(74) Representative: **Zipse Habersack Kritzenberger
Patentanwälte
Wotanstraße 64
80639 München (DE)**

(56) References cited:
EP-A2- 0 629 835        WO-A-87/07365
WO-A-03/093760        US-A- 6 097 477

• M. SJÖDAHL: "Electronic speckle photography: measurement of in-plane strain fields through the use of defocused laser speckle" APPL. OPT., vol. 34, no. 25, September 1995 (1995-09), pages 5799-5808, XP002405875
• AMODIO D ET AL: "DIGITAL SPECKLE CORRELATION FOR STRAIN MEASUREMENT BY IMAGE ANALYSIS" EXPERIMENTAL MECHANICS, SOCIETY FOR EXPERIMENTAL STRESS ANALYSIS,, US, vol. 43, December 2003 (2003-12), pages 396-402, XP008070110 ISSN: 0014-4851
• YAMAGUCHI I ET AL: "A laser-speckle strain gauge" JOURNAL OF PHYSICS E. SCIENTIFIC INSTRUMENTS, IOP PUBLISHING, BRISTOL, GB, vol. 14, no. 11, 1 November 1981 (1981-11-01), pages 1270-1273, XP020016354 ISSN: 0022-3735

**Description**

Technical Field

The present invention relates to a strain measurement method and a device for a test piece such as plastic, rubber, or metal as well as other structures, structural materials, and the like.

Prior Art

When a pulling load is applied to a test piece or some other measurement object such as a structure or a structural material (hereinafter, simply referred to as a test piece) when measuring the test piece, the test piece has the characteristic that it stretches in the direction the pulling weight is applied (vertically), and shrinks in the middle (horizontally). The Poisson's ratio is found from the vertical stretching (%) and the horizontal shrinkage (%). The formula is as follows:

$$\text{Poisson's ratio} = |\text{horizontal strain (\%)}| \, / \, |\text{vertical strain (\%)}|$$

When continuously finding Poisson's ratios with a pulling load continuously applied to a test piece, a wire resistance strain gauge is generally affixed to the text piece to find the Poisson's ratio from the change in resistance.
A method using sound waves finds the change in the transmission time for sound waves by adding an oscillation element and a receiving element to the test piece.
For measurement methods using a wire resistance strain gauge, a wire resistance strain gauge is attached to the test piece as preparation for measurement. Expertise is required to provide the necessary care to the direction and strength of attachment to the measurement location. During measurements, the wire resistance strain gauge may become dislocated if cracks or breaks occur in the test piece, which may cause damage or breakdown. The range of measurement is restricted to the range of measurement of the wire resistance strain gauge, such that this method may be unsuited for measurement up to the point of breakage of materials with a large rate of stretching such as rubber and plastic.
Methods using sound waves require attachment of a contact medium between the oscillation/receiving element and the test piece and that both surfaces of the test piece be parallel.
Further, according to prior art documents US 6,097,477 and JP 03274402 a method has been known to measure the Poisson' s ratio by using four perpendicular arranged video sensors in a laser speckle strain/deformation system.
It is an object of the present invention to provide a strain measurement method and device with a large measurement range.

Means to Solve the Problem

This object is solved by a device and method as recited in the independent claims.
According to the present invention, a strain measurement method and device is provided that is easy and accurate, but that does not require preparation. When laser beam light with superior linearity, brightness, wave shortness, and interference is irradiated onto a test piece, the light is reflected diffusely by the rough surface of the irradiation surface of the test piece, and a characteristic striping pattern is generated in space. This characteristic striping pattern is referred to as a laser speckle pattern and has the characteristic of parallel movement when there is stretching, deformation, or movement of the test piece. According to the present invention, this characteristic of laser speckle patterns is used to measure the strain of a test piece with accuracy and contact-free without requiring preparation.
In further detail, the strain measurement method of the present invention uses laser speckle patterns and measures a Poisson's ratio of a test piece in real time without contact.
The strain measurement method of the present invention also has a wide measurement range, extending up until the point when cracks or breaks occur in the test piece.
The strain measurement method of the present invention further measures the Poisson's ratio without affecting the shape or surface form of the test piece.
The strain measurement device of the present invention uses laser speckle patterns to measure the Poisson's ratio in real time without contacting the test piece.
The strain measurement device of the present invention also has a wide measurement range, extending up until the point when cracks or breaks occur in the test piece.
According to the present invention, measurement can be made immediately by merely irradiating laser beam light on a test piece without requiring preparation, and without applying an excess load such as the attachment of a wire resistance strain gauge on the test piece because non-contact measurement is used. Continuous measurement can be made until the test piece cracks or breaks by using the measurement system to follow the measurement point of the test piece, and the measurement range may be freely set. If sound waves are used, both surfaces of the test piece need to be parallel, but measurement according to the present invention can be made without affecting the shape or surface form of the test piece.

A detailed embodiment of the present invention is next described based on the drawings.

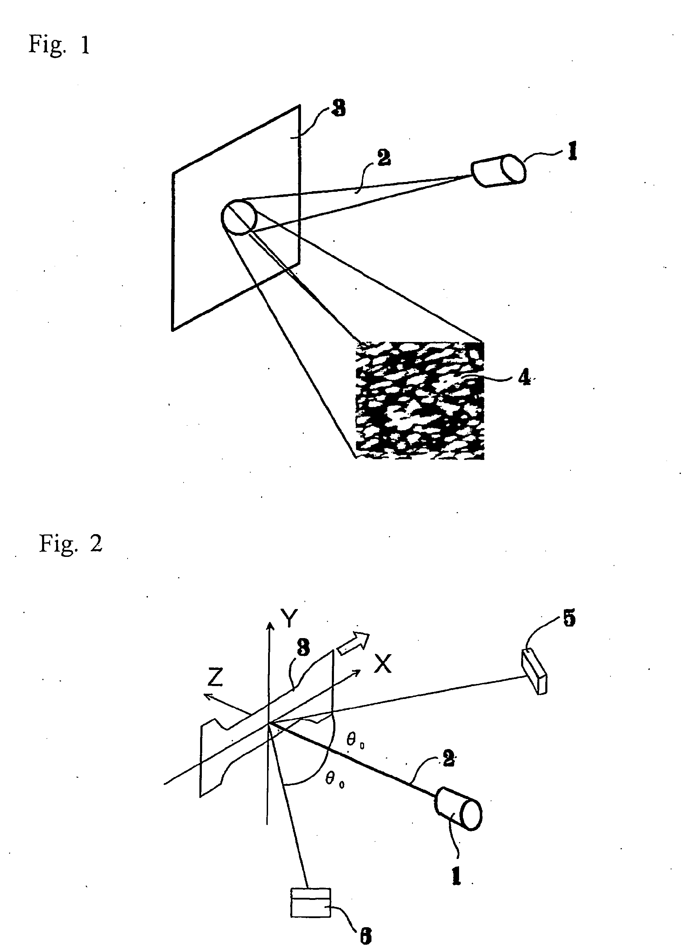

FIG. 1 shows a state of speckle pattern generation. In the drawing, a granular spot pattern is generated over the entire surface in front of a test piece 3 based according to the rough surface thereof when laser beam light is irradiated on the test piece 3 by a laser projector 1. This granular spot pattern is referred to as a speckle pattern 4.

The principle of measurement is shown in FIG. 2. In the drawing, when laser beam light 2 is irradiated by the laser projector 1 onto the test piece 3, the laser beam light 2 is reflected diffusely according to the rough surface of the irradiated test piece 3, and the speckle pattern 4 is generated in space. This speckle pattern is continuously filmed by two CCD (charge coupled device) cameras 5 and 6.

When a pulling load is applied to the test piece 3 in this state, the speckle pattern moves in the direction of stretching of the test piece 3 in proportion thereto, and the quantity of movement of the speckle pattern 4 before the load is applied and when it is applied it is calculated in real time with image processing. The movement quantity of the speckle pattern 4 filmed by the two CCD cameras 5 and 6 can be used to measure the strain in the direction of stretching. This is expressed with a formula.

$$\varepsilon_{xx} = -\frac{\Delta A_x}{2L_0 \tan \theta_0} = -\frac{7.8 \times 10^{-6}}{2 \times 0.4 \times \tan 20} = -27.08 \times 10^{-6}$$

$\varepsilon_{xx}$:    strain
$\Delta A_x$:    movement quantity (unit: m)
$L_0$:    Distance to CCD camera: 0.4 m
$\theta_0$:    Camera angle: 20 degrees

27.08 $\mu$ strain is the minimum resolution

This formula is for measuring the vertical strain in the direction of stretching. The horizontal strain in direction perpendicular to the stretching direction is measured simultaneously, and the horizontal strain is divided by the vertical strain to find the Poisson's ratio.

Example of Embodiment

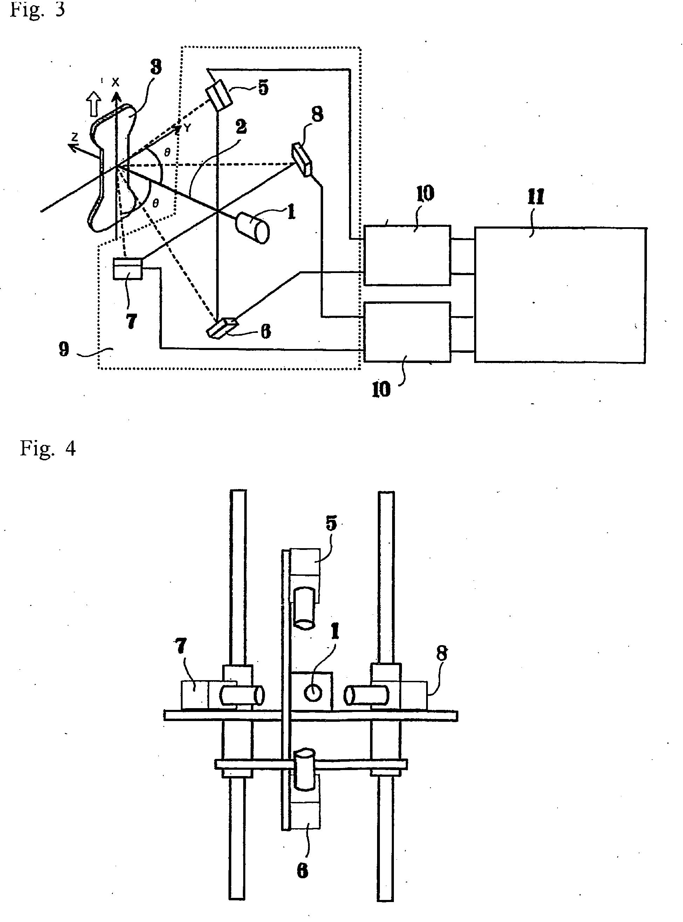

An example of embodiment of the present invention is shown in FIG. 3. In the drawing, the laser beam light 2 outputted from the laser projector 1 is perpendicularly irradiated on the test piece 3. The laser beam light 2 irradiated on the test piece 3 reflects diffusely according to the rough surface of the test piece 3, and a speckle pattern 4 is generated in front of the test piece 3. Four CCD cameras are positioned each at an equidistant from the test piece 3 for continuously filming the speckle pattern 4. When a pulling load is applied to the test piece 3 in this state, the speckle pattern 4 moves as the test piece 3 stretches, and an image processing device 10 calculates the change (vertical strain) in speckle pattern movement as filmed by the CCD camera 5 and the CCD camera 6 as well as the change (horizontal strain) in speckle pattern movement as filmed by a CCD camera 7 and a CCD camera 8 in real time.

The vertical strain and the horizontal strain are inputted in a data processing device 11 for finding the Poisson's ratio in real time by dividing the horizontal strain by the vertical strain.

An automatic tracking mechanism for a measurement system is shown in FIG. 4. In the drawing, it is possible to always measure the same portion of the test piece 3 as well as continuously measure the Poisson's ratio until cracks or breaks occur in the test piece 3 by tracking a measurement system 9 with the CCD camera 5 and the CCD camera 6 for the stretching direction of the speckle pattern 4 filmed before the pulling load was applied to the test piece 3.

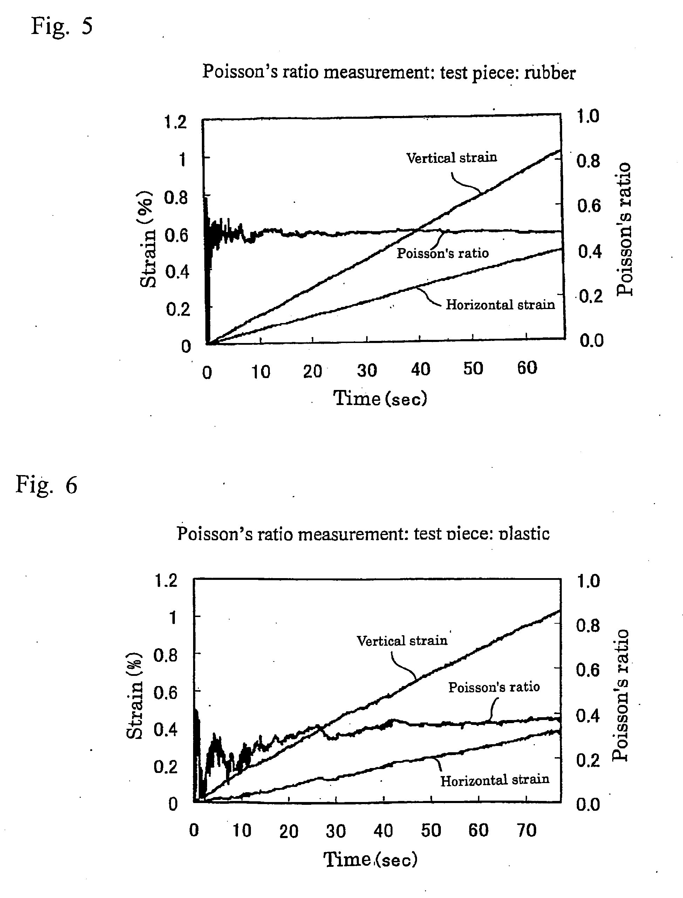

FIG. 5 and FIG. 6 show examples of measuring Poisson's ratios. FIG. 5 shows an example of a rubber test piece measurement, and FIG. 6 shows an example of a plastic test piece measurement.

Description of the Drawings

FIG. I     A view showing speckle pattern generation
FIG. 2     A view showing the principle for measurement
FIG. 3     A view showing an example of embodiment
FIG. 4     A view showing an automatic tracking mechanism for a measurement system
FIG. 5     A view showing an example of a Poisson's ratio measurement
FIG. 6     A view also showing an example of a Poisson's ratio measurement

Explanation of References

1     laser projector
2     laser beam light
3     test piece
4     speckle pattern
5     CCD camera
6     CCD camera
7     CCD camera
8     CCD camera
9     measurement system
10    image processing device
11    data processing device

**Claims**

1. A strain measurement method for measuring a Poisson's ratio of a test piece in real time without contacting the test piece (3), comprising:

   irradiating a laser beam light (2) from a laser projector (1) perpendicularly to the test piece (3), thereby generating a speckle pattern in front of the test piece (3) by diffused reflection of the laser beam light (2) by the test piece (3); disposing two pairs (5,6;7,8) of CCD cameras above (5), below (6), to the left (7) and to the right (8) of the laser beam, with the line of sight of each of a pair of CCD cameras at equal angles with respect to the laser beam (2); calculating a vertical strain from the quantity of movement of the speckle pattern in real time recorded by the CCD cameras (5,6) disposed above and below of the laser beam, and, at the same time, calculating a horizontal strain from the quantity of movement of the speckle pattern in real time recorded by the CCD cameras (7,8) disposed to the left and to the right of the laser beam; inputting the calculated vertical strain and the horizontal strain into a data processing device (11) where the Poisson's ratio is measured by dividing the horizontal strain by the vertical strain;

   **characterised by** further including the step of automatically tracking a measurement point of said test piece (3) with a measurement system comprising the CCD cameras (5,6), such that the same portion of the test piece (3) is measured during application of a pulling load.

2. A strain measurement device for measuring a Poisson's ratio of a test piece (3) in real time without contacting the test piece (3), comprising:

   a laser projector (1) being provided in front of the test piece (3), which projector is irradiating a laser beam light (2) perpendicularly to the test piece (3), thereby generating a speckle pattern in front of the test piece (3) by diffused reflection of the laser beam light by the test piece (3); two pairs of CCD cameras (5,6;7,8) disposed above, below, to the left and to the right of the laser beam (2), with the line of sight of each of a pair of CCD cameras at equal angles with respect to the laser beam (2); means for calculating a vertical strain (10) from the quantity of movement of the speckle pattern in real time recorded by the CCD cameras (5,6) disposed above and below of the laser beam; means for calculating a horizontal strain (10) from the quantity of movement of the speckle pattern in real time recorded by the CCD cameras (7,8) disposed to the left and to the right of the laser beam; a data processing device (11) configured to calculate a Poisson's ratio by dividing the horizontal strain by the vertical strain;

**characterized by**

an automatic tracking mechanism for a measurement system comprising the CCD cameras (5,6), which is configured to move the CCD cameras (5,6) such that the same portion of the test piece (3) is measured during application of a pulling load.

**Patentansprüche**

1. Belastungs-Messverfahren zum Messen eines Poisson-Verhältnisses eines Teststückes in Echtzeit ohne Kontaktierung des Teststückes (3), aufweisend:

   Emittieren eines Laserlichtstrahls (2) von einem Laserprojektor (1) senkrecht auf das Teststück (3), wodurch ein Speckle-Muster vor dem Teststück (3) durch diffuse Reflexion des Laserlichtstrahls (2) durch das Teststück (3) generiert wird;
   Anordnen zweier Paare (5, 6; 7, 8) von CCD-Kameras oberhalb (5), unterhalb (6), zur Linken (7) und zur Rechten (8) des Laserstrahls, wobei die Sichtlinie eines jeden Paares von CCD-Kameras zu gleichen Winkeln bezüglich des Laserstrahls (8) vorliegt;
   Berechnen einer vertikalen Belastung aus der Bewegungsquantität des Speckle-Musters in Echtzeit, wie es durch die CCD-Kameras (5, 6) aufgenommen worden ist, die oberhalb und unterhalb des Laserstrahls angeordnet sind, und gleichzeitige Berechnung einer horizontalen Belastung aus der Bewegungsquantität des Speckle-Musters in Echtzeit, wie es durch die CCD-Kameras (7, 8) aufgenommen wurde, die zur Linken und zur Rechten des Laserstrahls angeordnet sind;
   Eingeben der berechneten vertikalen und horizontalen Belastungen in eine Datenverarbeitungsvorrichtung (11), in der das Poisson-Verhältnis durch Teilen der horizontalen Belastung durch die vertikale Belastung gemessen wird;

   **gekennzeichnet durch** den weiteren Schritt einer automatischen Nachführung eines Messpunktes auf das Teststück (3) mit einem Messsystem, das die CCD-Kameras (5, 6) aufweist, derart, dass derselbe Abschnitt des Teststücks (3) während dem Aufbringen einer Zuglast gemessen wird.

2. Belastungs-Messvorrichtung zum Messen eines Poisson-Verhältnisses eines Teststücks (3) in Echtzeit ohne Kontaktieren des Teststücks (3), aufweisend:

   einen Laserprojektor (1), der vor dem Teststück (3) vorgesehen ist, welcher Projektor einen Laserlichtstrahl (2) senkrecht auf das Teststück (3) emittiert, wodurch ein Speckle-Muster vor dem Teststück (3) durch diffuse Reflexion des Laserlichtstrahls von dem Teststück (3) generiert wird;
   zwei Paare von CCD-Kameras (5, 6; 7, 8), die oberhalb, unterhalb, zur Linken und zur Rechten des Laserstrahls (2) angeordnet sind, wobei die Sichtlinie eines jeden Paares der CCD-Kameras bezüglich des Laserstrahls (2) zu gleichen Winkeln vorliegt;
   eine Vorrichtung zum Berechnen einer vertikalen Belastung (10) aus der Bewegungsquantität des Speckle-Musters in Echtzeit, wie es durch die CCD-Kameras (5, 6) aufgenommen wurde, die oberhalb und unterhalb des Laserstrahls angeordnet sind;
   eine Vorrichtung zum Berechnen einer horizontalen Belastung (10) aus der Bewegungsquantität des Speckle-Musters in Echtzeit, wie es durch die CCD-Kameras (7, 8) aufgenommen wurde, die zur Linken und zur Rechten des Laserstrahls angeordnet sind;
   eine Datenverarbeitungseinrichtung (11), die zur Berechnung eines Poisson-Verhältnisses konfiguriert ist, indem die horizontale Belastung durch die vertikale Belastung dividiert wird;

   **gekennzeichnet durch** eine automatische Führungseinrichtung für ein Messsystem, das die CCD-Kameras (5, 6) aufweist, das bestimmt ist, die CCD-Kameras (5, 6) so zu bewegen, dass derselbe Abschnitt des Teststücks (3) während dem Aufbringen einer Zuglast vermessen wird.

**Revendications**

1. Procédé de mesure de l'effort destiné à mesurer un coefficient de Poisson d'une éprouvette en temps réel sans entrer en contact avec l'éprouvette (3), comprenant :

• l'irradiation d'une lumière laser (2) à partir d'un projecteur laser (1) de manière perpendiculaire à l'éprouvette (3), générant ainsi une figure de speckle devant l'éprouvette (3) par réflexion diffuse de la lumière laser (2) par l'éprouvette (3) ;

• la disposition de deux paires (5,6 ; 7,8) de caméras CCD au-dessus (5), en dessous (6), à gauche (7) et à droite (8) du rayon laser, l'axe de visée de chacune des paires de caméras CCD étant situé à angles égaux par rapport au rayon laser (2) ;

• le calcul d'un effort vertical provenant de la quantité de mouvement de la figure de speckle en temps réel enregistré par les caméras CCD (5,6) disposées au-dessus et en dessous du rayon laser et, simultanément, le calcul d'un effort horizontal provenant de la quantité de mouvement de la figure de speckle en temps réel enregistré par les caméras CCD (7,8) disposées à gauche et à droite du rayon laser ;

• l'introduction de l'effort vertical et de l'effort horizontal calculés dans un dispositif de traitement de données (11) où le coefficient de Poisson est mesuré en divisant l'effort horizontal par l'effort vertical ;

**caractérisé par le fait qu'**il comporte en outre l'étape de :

• suivi automatique d'un point de mesure de ladite éprouvette (3) avec un système de mesure comprenant les caméras CCD (5,6), de telle sorte que la même partie d'éprouvette (3) est mesurée pendant l'exercice d'une charge de traction.

2. Dispositif de mesure de l'effort destiné à mesurer un coefficient de Poisson d'une éprouvette (3) en temps réel sans entrer en contact avec l'éprouvette (3), comprenant

• un projecteur laser (1) étant prévu devant l'éprouvette (3), ledit projecteur irradiant une lumière laser (2) de manière perpendiculaire par rapport à l'éprouvette (3), générant ainsi une figure de speckle devant l'éprouvette (3) par réflexion diffuse de la lumière laser par l'éprouvette (3) ;

• deux paires de caméras CCD (5,6 ; 7,8) disposées au-dessus, en dessous, à gauche et à droite du rayon laser (2), l'axe de visée de chacune des paires de caméras CCD étant situé à angles égaux par rapport au rayon laser (2) ;

• un moyen destiné à calculer un effort vertical (10) provenant de la quantité de mouvement de la figure de speckle en temps réel enregistré par les caméras CCD (5,6) disposées au-dessus et en dessous du rayon laser;

• un moyen destiné à calculer un effort horizontal (10) provenant de la quantité de mouvement de la figure de speckle en temps réel enregistré par les caméras CCD (7,8) disposées à gauche et à droite du rayon laser ;

• un dispositif de traitement des données (11) configuré pour calculer un coefficient de Poisson en divisant l'effort horizontal par l'effort vertical ;

**caractérisé par** un mécanisme auto-suiveur destiné à un système de mesure comprenant les caméras CCD (5,6), configuré pour déplacer les caméras CCD (5,6) de telle sorte que la même partie d'éprouvette (3) est mesurée pendant l'exercice d'une charge de traction.

Fig. 1

Fig. 2

Fig. 3

Fig. 4

8

## Fig. 5

Poisson's ratio measurement: test piece: rubber

## Fig. 6

Poisson's ratio measurement: test piece: plastic

## REFERENCES CITED IN THE DESCRIPTION

**Patent documents cited in the description**

- US 6097477 A
- JP 03274402 A